# EUROPEAN PATENT APPLICATION

(11) **EP 4 756 381 A2**
(43) Date of publication of application: **10.06.2026**
(21) Application number: 25217228.3
(22) Date of filing: 20.11.2025
(51) Int. Cl.: G01C 21/34

(54) **INFORMATION PROCESSING APPARATUS AND NON-TRANSITORY COMPUTER READABLE MEDIUM**

(30) Priority: 03.12.2024 JP 2024210722
(71) Applicant: Toyota Jidosha Kabushiki Kaisha, Toyota-shi, Aichi-ken 471-8571 (JP)
(72) Inventor: SAI, Seii, Nagoya-shi, 451-6015 (JP)
(74) Representative: TBK

(57) **Abstract**

An information processing apparatus according to an embodiment of the present disclosure includes a controller configured to execute a route search based on route search conditions including a departure point and a destination acquired from an information processing terminal of a user, generate at least one route candidate that meets the route search conditions, when the route candidate includes one or more reservation-based modes of transportation, determine the availability of the reservation-based modes of transportation, and transmit the route candidate to the information processing terminal when the availability of all of the reservation-based modes of transportation is equal to or greater than a threshold. The route candidate includes at least one piece of segment information that is a combination of a mode of transportation and a travel route by that mode of transportation.

## Description

### TECHNICAL FIELD

The present disclosure relates to an information processing apparatus and a program.

### BACKGROUND

Technology for route guidance is known. For example, Patent Literature (PTL) 1 discloses technology for making reservations for reservation-based modes of transportation included in routes selected by users, in a route guidance system for a plurality of modes of transportation including reservation-based modes of transportation.

### CITATION LIST

### Patent Literature

PTL 1: JP 7043980 B1

### SUMMARY

When route information including one or more reservation-based modes of transportation is proposed to a user, the user may not be able to make reservations for the reservation-based modes of transportation due to full occupancy or the like, and to use routes. When route information including one or more reservation-based modes of transportation is proposed to a user, it is desirable to propose route information that is likely to be available.

It would be helpful to provide a route guidance system that proposes route information that is likely to be available, for routes including reservation-based modes of transportation.

An information processing apparatus according to an embodiment of the present disclosure includes a controller configured to:
execute a route search based on route search conditions including a departure point and a destination acquired from an information processing terminal of a user;
generate at least one route candidate that meets the route search conditions;
when the route candidate includes one or more reservation-based modes of transportation, determine the availability of the reservation-based modes of transportation; and
transmit the route candidate to the information processing terminal when the availability of all of the reservation-based modes of transportation is equal to or greater than a threshold,
wherein the route candidate includes at least one piece of segment information that is a combination of a mode of transportation and a travel route by that mode of transportation.

According to an embodiment of the present disclosure, it is possible to provide a route guidance system that proposes route information that is likely to be available, for routes including reservation-based modes of transportation.

### BRIEF DESCRIPTION OF THE DRAWINGS

In the accompanying drawings:
FIG. 1 is a diagram schematically illustrating a configuration of a system according to an embodiment of the present disclosure;
FIG. 2 is a block diagram illustrating a schematic configuration of an information processing apparatus;
FIG. 3 is a block diagram illustrating a schematic configuration of an information processing terminal;
FIG. 4 is a flowchart illustrating operations of the information processing apparatus; and
FIG. 5 is a flowchart illustrating operations of the information processing apparatus.

### DETAILED DESCRIPTION

Hereinafter, an embodiment of the present disclosure will be described.

### (Outline of Embodiment)

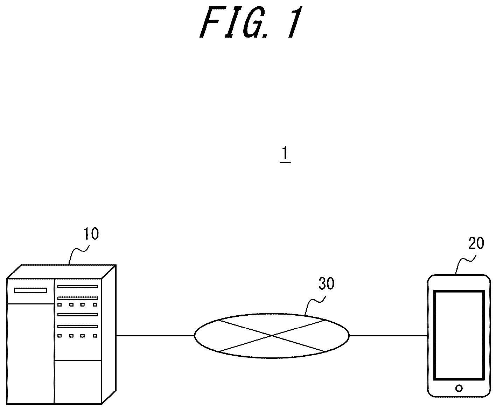

An outline of a system 1 according to the embodiment of the present disclosure will be described with reference to FIG. 1. The system 1 includes an information processing apparatus 10 and an information processing terminal 20. The information processing apparatus 10 and the information processing terminal 20 are communicably connected to a network 30 including, for example, the Internet, a mobile communication network, and the like.

The information processing apparatus 10 is, for example, a computer such as a server apparatus. The information processing apparatus 10 can communicate with the information processing terminal 20 via the network 30.

The information processing terminal 20 is, for example, a mobile phone, a smartphone, or a tablet PC.

An outline of the present embodiment will be first described, and details thereof will be described later. The information processing apparatus 10 acquires route search conditions including a departure point and a destination from the information processing terminal 20, and executes a route search. The information processing apparatus 10 generates at least one route candidate that meets the route search conditions from the result of the route search, and transmits the route candidate to the information processing terminal 20. When the route candidate includes one or more reservation-based modes of transportation, the information processing apparatus 10 determines the availability of the reservation-based modes of transportation based on information that affects the availability. When the availability of all of the reservation-based modes of transportation included in the route candidate is equal to or greater than a threshold, the information processing apparatus 10 transmits the route candidate including the reservation-based modes of transportation to the information processing terminal 20.

According to the present embodiment, for route candidates including reservation-based modes of transportation, ones in which all reservation-based modes of transportation included in each route candidate are likely to be available are presented to a user. This enables the exclusion of route candidates in which reservation-based modes of transportation are unavailable or likely to be unavailable, thereby improving technology related to route guide in terms of enhancing the usefulness and reliability of a route guidance system.

Next, configurations of the system 1 will be described in detail.

### (Configuration of Information Processing Apparatus)

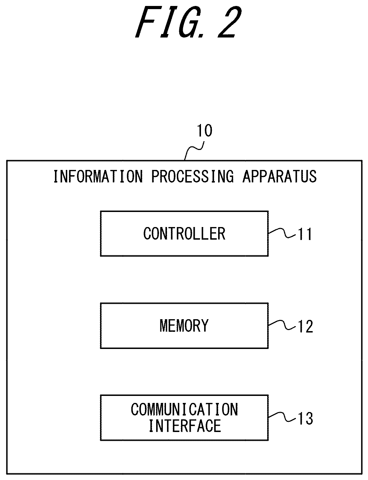

As illustrated in FIG. 2, the information processing apparatus 10 includes a controller 11, a memory 12, and a communication interface 13.

The controller 11 includes at least one processor, at least one programmable circuit, at least one dedicated circuit, or a combination of these. The processor is, for example, a general purpose processor such as a central processing unit (CPU) or a graphics processing unit (GPU), or a dedicated processor that is dedicated to specific processing, but is not limited to these. The programmable circuit is a field-programmable gate array (FPGA), for example, but is not limited to this. The dedicated circuit is an application specific integrated circuit (ASIC), for example, but is not limited to this. The controller 11 executes various processes related to operations of the information processing apparatus 10 and controls each component of the information processing apparatus 10.

The memory 12 includes one or more memories. The memories are, for example, semiconductor memories, magnetic memories, optical memories, or the like, but are not limited to these. The memories included in the memory 12 may each function as, for example, a main memory, an auxiliary memory, or a cache memory. The memory 12 stores any information to be used for operations of the information processing apparatus 10. For example, the memory 12 may store a system program, an application program, embedded software, and the like. The information stored in the memory 12 may be updated with, for example, information acquired from the network 30 via the communication interface 13.

The communication interface 13 includes at least one communication interface for connecting to the network 30. The communication interface is compliant with, for example, but not limited to, a mobile communication standard, a wired local area network (LAN) standard, or a wireless LAN standard, and may be compliant with any appropriate communication standard. In the present embodiment, the information processing apparatus 10 communicates with the information processing terminal 20 via the communication interface 13 and the network 30.

### (Configuration of Information Processing Terminal)

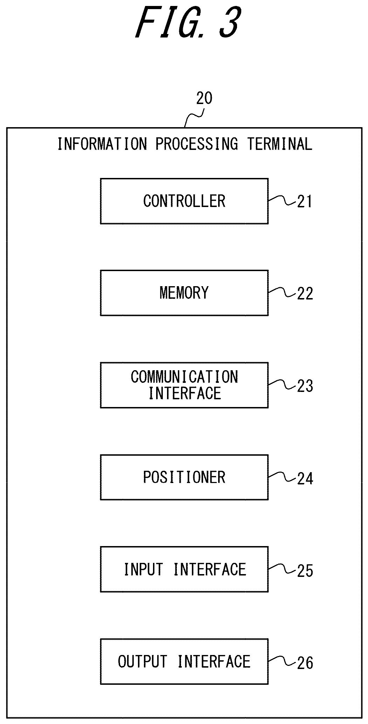

As illustrated in FIG. 3, the information processing terminal 20 includes a controller 21, a memory 22, a communication interface 23, a positioner 24, an input interface 25, and an output interface 26.

The controller 21 includes at least one processor, at least one programmable circuit, at least one dedicated circuit, or a combination of these. The controller 21 executes various processes related to operations of the information processing terminal 20 and controls each component of the information processing terminal 20.

The memory 22 includes one or more memories. The memory 22 stores any information to be used for operations of the information processing terminal 20. For example, the memory 22 may store a system program, an application program, a database, map information, and the like. The information stored in the memory 22 may be updated with, for example, information acquired from the network 30 via the communication interface 23.

The communication interface 23 includes one or more communication interfaces for connecting to the network 30. The communication interface is compliant with a mobile communication standard such as the 4th generation (4G) standard or the 5th generation (5G) standard, for example, but is not limited to these. In the present embodiment, the information processing terminal 20 communicates with the information processing apparatus 10 via the communication interface 23 and the network 30.

The positioner 24 includes at least one device for acquiring positional information on the information processing terminal 20. Specifically, the positioner 24 includes a receiver corresponding to the Global Positioning System (GPS), for example, but is not limited to this and may include a receiver corresponding to any satellite positioning system.

The input interface 25 includes at least one interface for input. The interface for input is, for example, physical keys, capacitive keys, a pointing device, a touch screen integrally provided with a display, or a microphone that receives audio input. The input interface 25 accepts an operation for inputting information to be used for operations of the information processing terminal 20.

The output interface 26 includes at least one interface for output. The interface for output may, for example, be an external or built-in display for outputting information as images or video, or an interface for connecting with an external output device. The display is, for example, a liquid crystal display (LCD) or an organic electro-luminescence (EL) display. The output interface 26 outputs information obtained by operations of the information processing terminal 20.

### (Flow of Operations of Information Processing Apparatus)

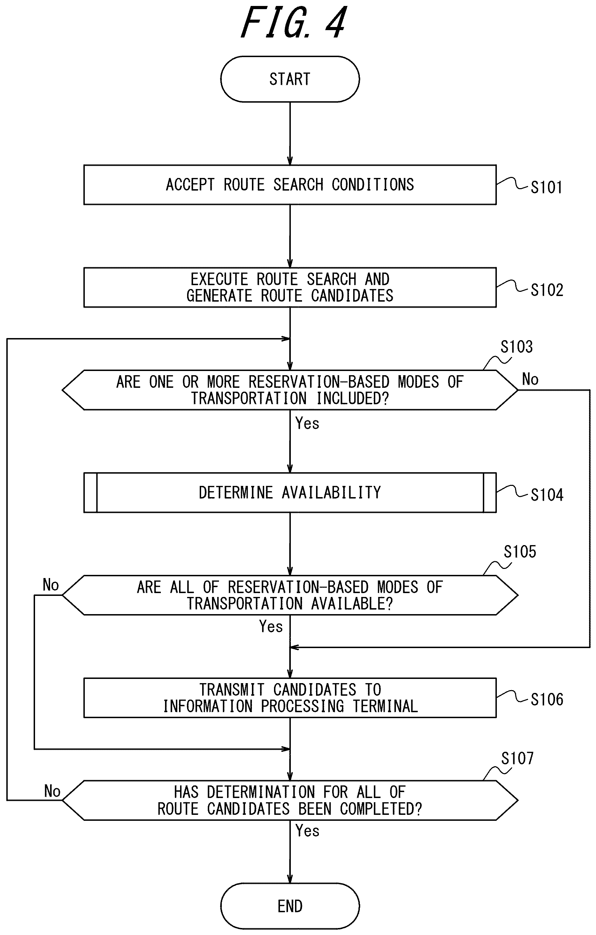

Operations of the information processing apparatus 10 according to the present embodiment will be described with reference to FIG. 4.

S101: The controller 11 of the information processing apparatus 10 accepts route search conditions from the information processing terminal 20 via the communication interface 13.

The route search conditions include a departure point and a destination. A method for acquiring the departure point in the information processing terminal 20 is not particularly limited, but may, for example, accept input from a user via the input interface 25. As another method, the current location of the information processing terminal 20 at the time of transmitting the route search conditions from the information processing terminal 20 to the information processing apparatus 10 is acquired using the positioner 24, and may be included as the departure point in the route search conditions. In this case, the controller 11 of the information processing apparatus 10 may recognize the current location of the information processing terminal 20 as the current location of the user who is in possession of the information processing terminal 20. Setting the current location of the user as the departure point allows a quick and easy route search to the destination even when the user does not know the address, landmarks, or the like of the current location.

The route search conditions may further include a departure date and time from the departure point or an arrival date and time at the destination, a setting of whether to include reservation-based modes of transportation, a usage condition, attribute information on the user, or the like.

The controller 21 of the information processing terminal 20 may include the time at the moment of transmitting the route search conditions to the information processing apparatus 10 as the departure date and time from the departure point in the route search conditions.

The usage condition may include a usage location, a usage time period, weather at a usage area, a usage distance, or the like.

The attribute information on the user may include the number of persons, the preferences of the user, a purpose of use, or any other information. The any other information may include, for example, the user's age or gender, modes of transportation frequently used by the user, or the like. The information processing terminal 20 may acquire the number of persons and any other information via the input interface 25, and include the number of persons and the information in the route search conditions.

Any method may be employed to acquire the preferences of the user and the purpose of use by the information processing apparatus 10. For example, the controller 11 of the information processing apparatus 10 may infer the preferences of the user from the user's usage history, input information, and the like. Similarly, the controller 11 of the information processing apparatus 10 may infer the purpose of use from the usage condition and/or the preferences of the user. Alternatively, the information processing apparatus 10 may acquire the preferences of the user and the purpose of use input by the user, via the input interface 25 of the information processing terminal 20 and the network 30.

S102: The controller 11 of the information processing apparatus 10 executes a route search based on the route search conditions received in S101. The controller 11 of the information processing apparatus 10 generates one or more route candidates that meet the route search conditions, based on the results of the route search. Each route candidate includes at least one piece of segment information that is a combination of a mode of transportation and a travel route by that mode of transportation.

S103: The controller 11 of the information processing apparatus 10 determines, for one of the route candidates generated in S102, whether that route candidate includes one or more reservation-based modes of transportation. When the route candidate includes one or more reservation-based modes of transportation (S103: Yes), the process proceeds to S104. When the route candidate includes no reservation-based modes of transportation (S103: No), the process proceeds to S106.

The reservation-based modes of transportation are modes of transportation that require prior reservations when the user intends to use the modes of transportation. The reservation-based modes of transportation include, for example, shared bicycles, car sharing, rental bicycles, and rental cars, but are not limited to these.

S104: The controller 11 of the information processing apparatus 10 determines the availability of the reservation-based modes of transportation included in the route candidate generated in S102. Any method can be employed to determine the availability. An example of the method for determining, by the controller 11 of the information processing apparatus 10, the availability of the reservation-based modes of transportation included in one of the route candidates will be described later.

S105: The controller 11 of the information processing apparatus 10 determines whether all of the reservation-based modes of transportation included in the route candidate, for which the availability has been determined in S104, are available. When all of the reservation-based modes of transportation included in that route candidate are available (S105: Yes), the process proceeds to S106. When at least one of the reservation-based modes of transportation included in that route candidate is unavailable (S105: No), the process proceeds to S107.

S106: The controller 11 of the information processing apparatus 10 transmits, to the information processing terminal 20 via the communication interface 13 and the network 30, route candidates that include no reservation-based modes of transportation and the route candidate in which all of the reservation-based modes of transportation are available.

S107: The controller 11 of the information processing apparatus 10 determines whether the processing of S103 has been completed for all of the route candidates generated in S102. When the processing of S103 has been completed for all of the route candidates generated in S102 (S107: Yes), the process ends. When the processing of S103 has not been completed for all of the route candidates generated in S102 (S107: No), the controller 11 of the information processing apparatus 10 performs the processing from S103 again for a relevant route candidate.

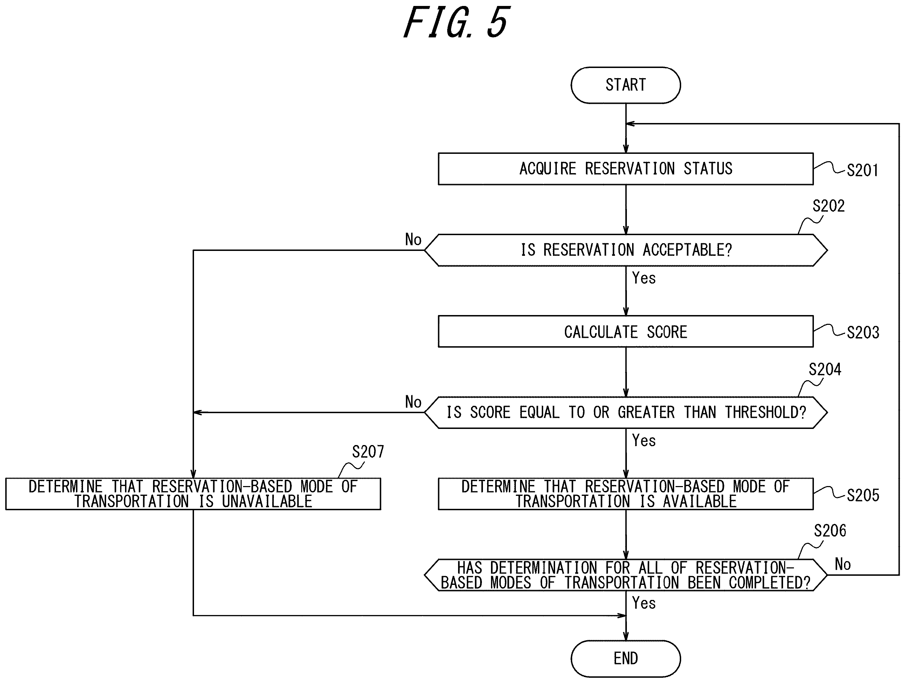

With reference to FIG. 5, an example of the method for determining, by the controller 11 of the information processing apparatus 10, the availability of the reservation-based modes of transportation included in one of the route candidates will be described. FIG. 5 is a flowchart detailing the processing of S104.

S201: The controller 11 of the information processing apparatus 10 acquires, via the communication interface 13, the reservation status of one of the reservation-based modes of transportation, from a server or the like of a company that operates that reservation-based mode of transportation included in the route candidate generated in S102.

S202: The controller 11 of the information processing apparatus 10 determines, with reference to the reservation status acquired in S201, whether that reservation-based mode of transportation can be reserved during a time period in which that reservation-based mode of transportation is intended to be used. When that reservation-based mode of transportation can be reserved (S202: Yes), the process proceeds to S203. When that reservation-based mode of transportation cannot be reserved (S202: No), the process proceeds to S207.

S203: The controller 11 of the information processing apparatus 10 calculates, for the reservation-based mode of transportation that has been determined to be reservable in S202, a score based on the possibility that the user actually uses that reservation-based mode of transportation, based on information that affects the availability of that reservation-based mode of transportation.

The information that affects the availability includes information regarding trends in use. The information regarding trends in use can be any information, but may include, for example, a usage condition or attribute information on the user. More specifically, the information regarding trends in use may include a usage location, a usage time period, weather at a usage area, a usage distance, the preferences of the user, a purpose of use, the number of persons, or the like.

As a specific example, when that reservation-based mode of transportation is a "shared bicycle," the controller 11 of the information processing apparatus 10 may consider, as positive scoring factors, factors such as a usage location being a high-usage area like a tourist spot or downtown, a time period being a high-usage time like commuting hours, good weather at a usage area, a small elevation difference in a travel route included in the segment information, a usage distance being equal to or less than a predetermined value (e.g., 5 km), a distance from a specific point (e.g., departure point) to a shared bicycle port being within a predetermined distance, the user frequently using shared bicycles, and the like. Conversely, the controller 11 of the information processing apparatus 10 may consider, as negative scoring factors, factors such as a large elevation difference in a travel route included in the segment information, bad weather at a usage area, a usage distance being equal to or greater than another predetermined value (e.g., 50 km), and the like.

The controller 11 of the information processing apparatus 10 may acquire the information regarding trends in use, from the route search conditions received from the information processing terminal 20, from the server of the company that operates that reservation-based mode of transportation, or from other servers on the internet, or may infer the information regarding trends in use based on that information.

S204: The controller 11 of the information processing apparatus 10 determines whether the score calculated in S203 exceeds a predetermined threshold. When the score exceeds the predetermined threshold (S204: Yes), the process proceeds to S205. When the score does not exceed the predetermined threshold (S204: No), the process proceeds to S207.

S205: The controller 11 of the information processing apparatus 10 determines that the reservation-based mode of transportation is available.

S206: The controller 11 of the information processing apparatus 10 determines whether the availability has been determined for all of the reservation-based modes of transportation included in the route candidate. When the determination has been completed for all of the reservation-based modes of transportation included in the route candidate (S206: Yes), the process ends. When the determination has not been completed for all of the reservation-based modes of transportation included in the route candidate (S206: No), the controller 11 of the information processing apparatus 10 performs the processing from S201 again for a reservation-based mode of transportation for which the determination has not been completed yet.

S207: The controller 11 of the information processing apparatus 10 determines that the reservation-based mode of transportation is unavailable and ends the process.

As described above, the information processing apparatus 10 according to the present embodiment acquires, from the information processing terminal 20, route search conditions including a departure point and a destination, and executes a route search. The information processing apparatus 10 generates at least one route candidate that meets the route search conditions from the result of the route search, and transmits the route candidate to the information processing terminal 20. When the route candidate includes one or more reservation-based modes of transportation, the information processing apparatus 10 determines the availability of the reservation-based modes of transportation. When the availability of all of the reservation-based modes of transportation included in the route candidate is equal to or greater than a threshold, the information processing apparatus 10 also transmits the route candidate including the reservation-based modes of transportation to the information processing terminal 20.

According to such a configuration, for route candidates including reservation-based modes of transportation, ones in which all reservation-based modes of transportation included in each route candidate are likely to be available are presented to a user. This enables the exclusion of route candidates in which reservation-based modes of transportation are unavailable or likely to be unavailable, thereby improving technology related to route guide in terms of enhancing the usefulness and reliability of a route guidance system.

In the embodiment described above, the controller 11 of the information processing apparatus 10 may transmit, to the information processing terminal 20, the priority of outputting route candidates to the output interface 26 of the information processing terminal 20, along with the route candidates. In this case, the controller 21 of the information processing terminal 20 may set the order of outputting the route candidates based on the received priority. The priority is information that includes the order of outputting the route candidates transmitted from the information processing apparatus 10 to the information processing terminal 20. When a plurality of route candidates is transmitted to the information processing terminal 20, the controller 11 of the information processing apparatus 10 may set the order of displaying the plurality of route candidates based on a predetermined condition, and transmit the order, as priority, along with the plurality of route candidates. As the predetermined condition, any condition can be adopted. For example, the controller 11 of the information processing apparatus 10 may infer a condition that meets the preferences of a user, based on a usage condition, usage history, or attribute information on the user, and may use the inferred condition as the predetermined condition. Provided that a large number of route candidates are output to the output interface 26 of the information processing terminal 20 without any setting of priority, the user takes time to confirm which route candidate is recommended, which route candidate best matches the preferences of the user, or the like. By setting the output order of route candidates based on information regarding priority, as described above, the user can more easily find a route candidate that is close to the preferences.

In the embodiment described above, for route candidates including reservation-based modes of transportation, the controller 11 of the information processing apparatus 10 may transmit the route candidates to the information processing terminal 20 after making reservations for all of the reservation-based modes of transportation included in the route candidates. For example, for a reservation-based mode of transportation included in a route candidate, it may have been possible to make a reservation when the controller 11 of the information processing apparatus 10 performs a route search, but it may become unavailable before a user completes reservation processing. Therefore, even when the user selects a route candidate including one or more reservation-based modes of transportation that can be reserved in the above-described embodiment, there is a possibility that the user cannot actually use the reservation-based modes of transportation and cannot travel along the route candidate. In contrast, as described above, making the reservations for the reservation-based modes of transportation before transmitting the route candidates to the information processing terminal 20 can ensure that the user can reliably use reservation-based modes of transportation when the user selects a route candidate including those reservation-based modes of transportation. When the user selects any one of the route candidates, the controller 11 of the information processing apparatus 10 cancels the other reservations for reservation-based modes of transportation than those included in the route candidate selected by the user.

In the embodiment described above, for route candidates including reservation-based modes of transportation, the controller 11 of the information processing apparatus 10 may transmit the route candidates to the information processing terminal 20, after completing reservations for some of the reservation-based modes of transportation included in the route candidates. The reservation-based modes of transportation to be reserved by the controller 11 of the information processing apparatus 10 may be determined freely. For example, the controller 11 of the information processing apparatus 10 may transmit route candidates to the information processing terminal 20, after completing reservations for reservation-based modes of transportation that incur no cancellation fee, at the time of executing a route search. Such a configuration can avoid unnecessary expenses for routes that a user does not intend to use.

While the present disclosure has been described with reference to the drawings and examples, it should be noted that various modifications and revisions may be implemented by those skilled in the art based on the present disclosure. Accordingly, such modifications and revisions are included within the scope of the present disclosure. For example, functions or the like included in each component, each step, or the like can be rearranged without logical inconsistency, and a plurality of components or steps can be combined into one or divided.

For example, an embodiment in which a general purpose computer functions as the information processing apparatus 10 according to the above embodiment can also be implemented. Specifically, a program in which processes for realizing the functions of the information processing apparatus 10 according to the above embodiment are written may be stored in a memory of a general purpose computer, and the program may be read and executed by a processor. Accordingly, the present disclosure can also be implemented as a program executable by a processor, or a non-transitory computer readable medium storing the program.

Examples of some embodiments of the present disclosure are described below. However, it should be noted that the embodiments of the present disclosure are not limited to these examples.
[Appendix 1] An information processing apparatus comprising a controller configured to:
   execute a route search based on route search conditions including a departure point and a destination acquired from an information processing terminal of a user;
   generate at least one route candidate that meets the route search conditions;
   when the route candidate includes one or more reservation-based modes of transportation, determine availability of the reservation-based modes of transportation; and
   transmit the route candidate to the information processing terminal when the availability of all of the reservation-based modes of transportation is equal to or greater than a threshold,
   wherein
   the route candidate includes at least one piece of segment information that is a combination of a mode of transportation and a travel route by that mode of transportation, and
   the departure point is set based on current location information acquired by a positioner provided in the information processing terminal. [Appendix 2] An information processing apparatus comprising a controller configured to:
   execute a route search based on route search conditions including a departure point and a destination acquired from an information processing terminal of a user;
   generate at least one route candidate that meets the route search conditions;
   when the route candidate includes one or more reservation-based modes of transportation, determine availability of the reservation-based modes of transportation; and
   transmit the route candidate to the information processing terminal when the availability of all of the reservation-based modes of transportation is equal to or greater than a threshold,
   wherein the route candidate includes at least one piece of segment information that is a combination of a mode of transportation and a travel route by that mode of transportation.
[Appendix 3] The information processing apparatus according to appendix 2, wherein the departure point is a current location of the user.
[Appendix 4] The information processing apparatus according to appendix 2 or 3, wherein the route search conditions include a departure date and time from the departure point, or an arrival date and time at the destination.
[Appendix 5] The information processing apparatus according to any one of appendices 2 to 4, wherein the route search conditions further include a setting of whether to include reservation-based modes of transportation.
[Appendix 6] The information processing apparatus according to any one of appendices 2 to 5, wherein
   the route search conditions further include a usage condition and attribute information on the user,
   the usage condition includes a usage location, a usage time period, weather at a usage area, or a usage distance, and
   the attribute information on the user includes a number of persons, a preference of the user, or a purpose of use.
[Appendix 7] The information processing apparatus according to any one of appendices 2 to 6, wherein the controller is configured to determine the availability based on trends in use of the modes of transportation.
[Appendix 8] The information processing apparatus according to any one of appendices 2 to 7, wherein when there is a plurality of route candidates in which the availability of all of the reservation-based modes of transportation is equal to or greater than the threshold, the controller is configured to set priority to the route candidates to be displayed on the information processing terminal, based on a predetermined condition.
[Appendix 9] The information processing apparatus according to appendix 8, wherein
   the predetermined condition includes a condition inferred based on a usage condition, or a usage history of the user or attribute information on the user,
   the usage condition includes a usage location, a usage time period, weather at a usage area, or a usage distance, and
   the attribute information on the user includes a number of persons, a preference of the user, or a purpose of use.
[Appendix 10] The information processing apparatus according to any one of appendices 2 to 9, wherein the controller is configured to transmit the route candidate to the information processing terminal, after making reservations for the reservation-based modes of transportation included in the route candidate to be transmitted to the information processing terminal.
[Appendix 11] The information processing apparatus according to any one of appendices 2 to 10, wherein the controller is configured to transmit the route candidate to the information processing terminal, after making a reservation for a reservation-based mode of transportation that incurs no cancellation fee, among the reservation-based modes of transportation included in the route candidate to be transmitted to the information processing terminal.
[Appendix 12] The information processing apparatus according to appendix 10 or 11, wherein the controller is configured to cancel the reservations when a route that includes the reserved reservation-based modes of transportation is not selected by the user.
[Appendix 13] A program configured to cause a computer to execute operations, the operations comprising:
   executing a route search based on route search conditions including a departure point and a destination acquired from an information processing terminal of a user;
   generating at least one route candidate that meets the route search conditions;
   when the route candidate includes one or more reservation-based modes of transportation, determining availability of the reservation-based modes of transportation; and
   transmitting the route candidate to the information processing terminal when the availability of all of the reservation-based modes of transportation is equal to or greater than a threshold,
   wherein the route candidate includes at least one piece of segment information that is a combination of a mode of transportation and a travel route by that mode of transportation.
[Appendix 14] The program according to appendix 13, wherein the route search conditions include a departure date and time from the departure point, or an arrival date and time at the destination.
[Appendix 15] The program according to appendix 13 or 14, wherein the route search conditions further include a setting of whether to include reservation-based modes of transportation.
[Appendix 16] The program according to any one of appendices 13 to 15, wherein
   the route search conditions further include a usage condition and attribute information on the user,
   the usage condition includes a usage location, a usage time period, weather at a usage area, or a usage distance, and
   the attribute information on the user includes a number of persons, a preference of the user, or a purpose of use.
[Appendix 17] The program according to any one of appendices 13 to 16, wherein the operations further comprise determining the availability based on trends in use of the modes of transportation.
[Appendix 18] The program according to any one of appendices 13 to 17, wherein the operations further comprise transmitting the route candidate to the information processing terminal, after making reservations for the reservation-based modes of transportation included in the route candidate to be transmitted to the information processing terminal.
[Appendix 19] The program according to any one of appendices 13 to 18, wherein the operations further comprise transmitting the route candidate to the information processing terminal, after making a reservation for a reservation-based mode of transportation that incurs no cancellation fee, among the reservation-based modes of transportation included in the route candidate to be transmitted to the information processing terminal.
[Appendix 20] The program according to appendix 18 or 19, wherein the operations further comprise cancelling the reservations when a route that includes the reserved reservation-based modes of transportation is not selected by the user.

## Claims

1. An information processing apparatus (10) comprising a controller (11) configured to:
execute a route search based on route search conditions including a departure point and a destination acquired from an information processing terminal (20) of a user;
generate at least one route candidate that meets the route search conditions;
when the route candidate includes one or more reservation-based modes of transportation, determine availability of the reservation-based modes of transportation; and
transmit the route candidate to the information processing terminal (20) when the availability of all of the reservation-based modes of transportation is equal to or greater than a threshold,
wherein the route candidate includes at least one piece of segment information that is a combination of a mode of transportation and a travel route by that mode of transportation.

2. The information processing apparatus (10) according to claim 1, wherein the departure point is a current location of the user.

3. The information processing apparatus (10) according to claim 1, wherein the route search conditions include a departure date and time from the departure point, or an arrival date and time at the destination.

4. The information processing apparatus (10) according to claim 1, wherein the route search conditions further include a setting of whether to include reservation-based modes of transportation.

5. The information processing apparatus (10) according to claim 1, wherein
the route search conditions further include a usage condition and attribute information on the user,
the usage condition includes a usage location, a usage time period, weather at a usage area, or a usage distance, and
the attribute information on the user includes a number of persons, a preference of the user, or a purpose of use.

6. The information processing apparatus (10) according to claim 1, wherein the controller (11) is configured to determine the availability based on trends in use of the modes of transportation.

7. The information processing apparatus (10) according to claim 1, wherein when there is a plurality of route candidates in which the availability of all of the reservation-based modes of transportation is equal to or greater than the threshold, the controller (11) is configured to set priority to the route candidates to be displayed on the information processing terminal (20), based on a predetermined condition.

8. The information processing apparatus (10) according to claim 7, wherein
the predetermined condition includes a condition inferred based on a usage condition, or a usage history of the user or attribute information on the user,
the usage condition includes a usage location, a usage time period, weather at a usage area, or a usage distance, and
the attribute information on the user includes a number of persons, a preference of the user, or a purpose of use.

9. The information processing apparatus (10) according to claim 1, wherein the controller (11) is configured to transmit the route candidate to the information processing terminal (20), after making reservations for the reservation-based modes of transportation included in the route candidate to be transmitted to the information processing terminal (20).

10. The information processing apparatus (10) according to claim 1, wherein the controller (11) is configured to transmit the route candidate to the information processing terminal (20), after making a reservation for a reservation-based mode of transportation that incurs no cancellation fee, among the reservation-based modes of transportation included in the route candidate to be transmitted to the information processing terminal (20).

11. The information processing apparatus (10) according to claim 9 or 10, wherein the controller (11) is configured to cancel the reservations when a route that includes the reserved reservation-based modes of transportation is not selected by the user.

12. A non-transitory computer readable medium storing a program configured to cause a computer to execute operations, the operations comprising:
executing a route search based on route search conditions including a departure point and a destination acquired from an information processing terminal (20) of a user;
generating at least one route candidate that meets the route search conditions;
when the route candidate includes one or more reservation-based modes of transportation, determining availability of the reservation-based modes of transportation; and
transmitting the route candidate to the information processing terminal (20) when the availability of all of the reservation-based modes of transportation is equal to or greater than a threshold,
wherein the route candidate includes at least one piece of segment information that is a combination of a mode of transportation and a travel route by that mode of transportation.

13. The non-transitory computer readable medium according to claim 12, wherein the route search conditions include a departure date and time from the departure point, or an arrival date and time at the destination.

14. The non-transitory computer readable medium according to claim 12, wherein the route search conditions further include a setting of whether to include reservation-based modes of transportation.

15. The non-transitory computer readable medium according to claim 12, wherein
the route search conditions further include a usage condition and attribute information on the user,
the usage condition includes a usage location, a usage time period, weather at a usage area, or a usage distance, and
the attribute information on the user includes a number of persons, a preference of the user, or a purpose of use.
